# EUROPÄISCHE PATENTANMELDUNG

(11) **EP 1 154 250 A1**
(43) Veröffentlichungstag der Anmeldung: **14.11.2001**
(21) Anmeldenummer: 01109900.9
(22) Anmeldetag: 24.04.2001
(51) Int. Cl.: G01K 7/16

(54) **Temperaturfühler**

(30) Priorität: 13.05.2000 DE 20008664 U
(71) Anmelder: AB Elektronik GmbH, 59368 Werne (DE)
(72) Erfinder: Fichte, Werner, 01738 Colmnitz (DE); Lachman, Gernot, 01723 Wilsdruff (DE); Närdemann, Dieter, 59067 Hamm (DE)
(74) Vertreter: Hoffmeister, Helmut, Dr.

(57) **Zusammenfassung**

Die Erfindung betrifft eine Einrichtung zur Temperaturfühlung, die wenigstens aufweist, einen Temperatursensor (1) mit wenigstens einem Anschlußelement (11) und einen Haltekörper (4, 12), der den Temperatursensor (1) und die Anschlußelemente (11) wenigstens teilweise umschließt und ein Verfahren zu dessen Herstellung. Um eine Einrichtung zur Temperaturfühlung einfacher herzustellen und zu montieren zu können, ist der Haltekörper als ein Umspritzungskörper (4) und ein Umschließungskörper (12) ausgebildet. Die Anschlußelemente (11) wenigstens eines Temperatursensors (1), der durch einen Umschließungskörper (12) wenigstens teilweise umschlossen ist, sind durch ein Trägerprofil (3) verbunden. Die Anschlußelemente (11) jedes Temperatursensors (1) und das sie verbindende Trägerprofil (3) sind von einem Umspritzungskörper (4) wenigstens teilweise umschlossen, der einen wenigstens teilweise umlaufenden Profilringkörper (5.1) aufweist. Das Trägerprofil (3) ist wenigstens im Bereich der Anschlußelemente (11) zu durchtrennen und die vom Umschließungskörper (12) umschlossenen Temperatursensensoren (1) und die vom Umspritzungskörper (4) umschlossenen Anschlußelemente sind zu Einsetzelementen vereinzelt. Ein Einsetzelement ist in einen Gehäusehohlkörper (7) mit einer wenigstens teilweise umlaufenden Gehäuseringausnehmung (5.2) so einzuschieben, daß der Profilringkörper (5.1) in die Gehäuseringausnehmung (5.2) einschnappt und mit der so ausgebildeten Verrastungseinrichtung (5) das Einsatzelement mit dem Gehäusehohlkörper (7) verbunden ist.

## Beschreibung

Die Erfindung betrifft eine Einrichtung zur Temperaturfühlung, die wenigstens aufweist
- einen Temperatursensor mit wenigstens einem Anschlußelement und
- einen Haltekörper, der den Temperatursensor und die Anschlußelemente wenigstens teilweise umschließt und ein Verfahren zu seiner Herstellung.

Eine Einrichtung der eingangs genannten Art ist aus der DE-4 117 290 bekannt. Sie weist einen mit einem elektrisch isolierenden Kunststoff umspritzten, vormontierten Gebersatz auf, welcher ein auf Temperatur ansprechendes Meßelement, elektrische Anschlüsse und vom Meßelement zu den Anschlüssen führende elektrische Verbindungselemente hat.

Um den Temperaturgeber kostengünstig herstellen zu können, werden zur Fixierung des Meßelements lediglich zwei spannzangenartige Kontaktfedern vorgesehen.

Aus der DE-C-4 227 578 ist ein Temperaturgeber bekannt, der einen Kontaktsockel und einen Halter aufweist, der zwei identische Kontaktschienen trägt. Die Enden der Kontaktschienen liegen federnd an einem Meßwiderstand.

Nachteilig ist, daß der Temperaturgeber durch die Gestaltung des Halters aufwendig herzustellen ist.

Aus der EP-A-0 821 222 ist ein Temperatursensor und ein Spritzwerkzeug zu seiner Herstellung bekannt. Bei einem Sensor mit einem vormontierbaren, ein Geberelement mit Anschlußleutungen aufweisenden Gebersatz wird zur Herstellung zunächst der Gebersatz auf einen Kern eines Spritzwerkzeuges befestigt und anschließend in eine Spritzgießform eingeführt. Nach dem Umspritzen mit Kunststoff wird der Kern aus dem Sensor herausgezogen. In dem Sensor verbleibt eine Vertiefung.

Nachteilig ist, daß der Temperaturgeber durch die Gestaltung des Sensors aufwendig herzustellen ist.

Es stellt sich deshalb die Aufgabe, eine Einrichtung zur Temperaturfühlung der eingangs genannten Art so weiter zu entwickeln, daß sie einfacher herzustellen und zu montieren ist.

Erfindungsgemäß wird diese Aufgabe durch die Merkmale des Anspruchs 1 gelöst.

Die mit der Erfindung erzielten Vorteile bestehen insbesondere darin, daß durch den Profilringkörper und die Gehäuseringausnehmung der Verrasterungseinrichtung der Umspritzungskörper des Einsatzelements und der Gehäusehohlkörper nicht miteinander verbunden werden. Hierdurch wird der Einsatz von speziellen Dichtelementen sowie ein Verschweißen vermieden. Durch das Einsetzen von untereinander verbundenen Temperatursensoren werden die Herstellungs- und Montagekosten niedrig gehalten bei gleichzeitiger Realisierbarkeit von hohen Temperaturgenauigkeiten. Ein weiterer Vorteil ist, daß durch die Unterteilung in Umspritzungs- und in einen Umschließungskörper die Kapselung der Temperatursensoren und der Anschlußelemente in unterschiedlichen Schritten und damit in verschiedenen Fertigungsstandorten durchgeführt werden kann.

Das Trägerprofil kann aus Kunststoff oder Metall hergestellt sein.

Die Temperatursensoren können durch ein Freischneidträgerprofil als Trägerprofil zu einem Sensor-Block verbunden sein.

Die Einsatzelemente, die durch das Umspritzen der Anschlußelemente entstehen, können ebenfalls durch das Freischneidträgerprofil verbunden sein. Durch die vom Lieferanten bereitgestellten Sensorblöcke, die fertig an die Anschlußelemente angelötete und/ oder gekapselte Temperatursensoren enthält, lassen sich auf einfache Art und Weise die Einsetz-Blöcke herstellen. Bedingt durch die Zulieferungen sind diese als Vierer-Blöcke ausgebildet.

Aus den Einsetz-Blöcken kann jeweils ein Einzelelement herausgedrückt werden. Diese Vorgehensweise, beginnend bei der Zulieferung, über die Umspritzung bis hin zum Herausdrücken des Einzelelements sichert die niedrigen Herstellungskosten.

Oberhalb des Temperatursensors kann zwischen den Anschlußelementen wenigstens teilweise eine Wärmeleitpaste eingebracht sein. Das Einbringen der Wärmeleitpaste in diesem Bereich sichert das genaue Erfassen der Temperaturwerte.

Die Anschlußelemente können als Kontaktträger aus dem Umspritzungskörper herausragen und wenigstens teilweise von einem Steckergehäusekörper des Gehäusehohlkörpers umschlossen sein. Diese Lösung vermeidet den Einsatz von Dichtelementen bzw. den Aufwand zur Erzielung einer dichten Verschweißung.

Der Temperatursensor kann als NTC-Sensor ein Widerstandselement mit negativen oder als PTC-Sensor ein Widerstandselement mit positiven Temperaturkoeffizienten sein. Welches Widerstandselement verwendet wird, hängt von den jeweiligen Einsatzbedingungen und -forderungen ab.

Der Umspritzungskörper kann aus einem isolierenden Material hergestellt sein.

Dieses Material kann ein Kunststoff sein.

Sowohl der Umspritzungskörper als auch der Gehäusehohlkörper können aus Kunststoff geformt sein. Insbesondere der Einsatz von Kunststoff sichert die einfache und abdichtende Verbindung der einzelnen Teile der Einrichtung.

Die Erfindung wird bei einem Verfahren durch die Verfahrensschritte des Anspruchs 11 gelöst.
Die Hiermit entstehenden Vorteile bestehen insbesondere darin, daß mehrere Temperatursensoren und mehrere Anschlußelemente gleichzeitig schrittweise zu mehreren Einheiten vorgefertigt und dann einzeln zu einem Temperaturfühler komplettiert werden. Hierdurch reduzieren sich die Fertigungszeiten und -kosten ganz wesentlich.

In den Ansprüchen 12 bis 17 werden weitere Maßnahmen zur vorteilhaften Verbesserung der im Anspruch 11 angegebenen Verfahrensschritte aufgeführt.

Ein Ausführungsbeispiel der Erfindung ist in der Zeichnung dargestellt und wird in der folgenden Beschreibung näher erläutert. Es zeigen
- Fig. 1: einen Temperaturfühler in einem schematisch dargestellten Längsschnitt,

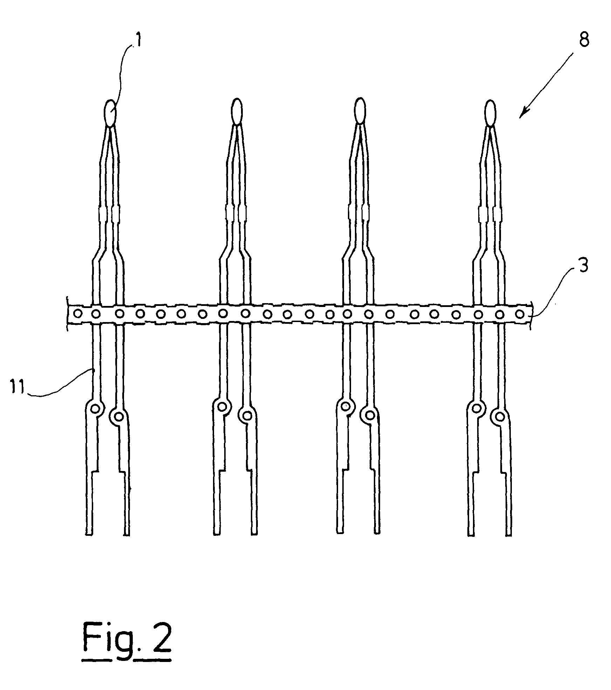

- Fig. 2: einen Sensor-Viererblock in einer schematisch dargestellten Draufsicht,

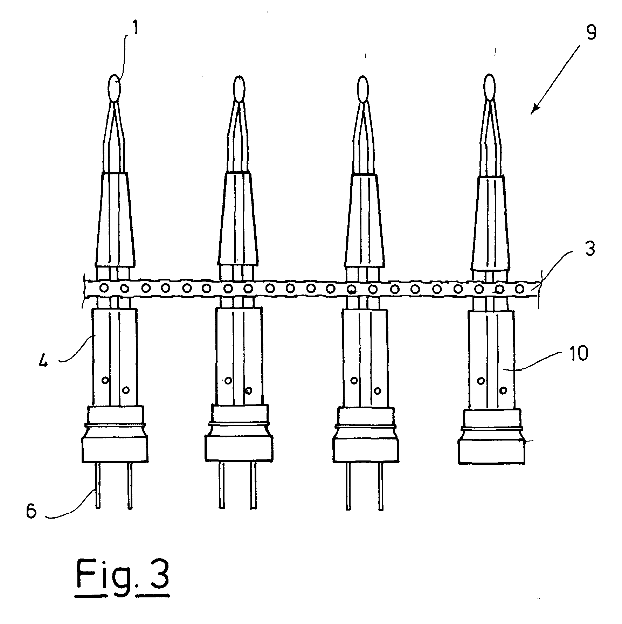

- Fig. 3: einen Einsetz-Viererblock in einer schematisch dargestellten Draufsicht und
- Fig. 4: einen Temperaturfühler gemäß Fig. 1 in einem vormontierten Zustand.

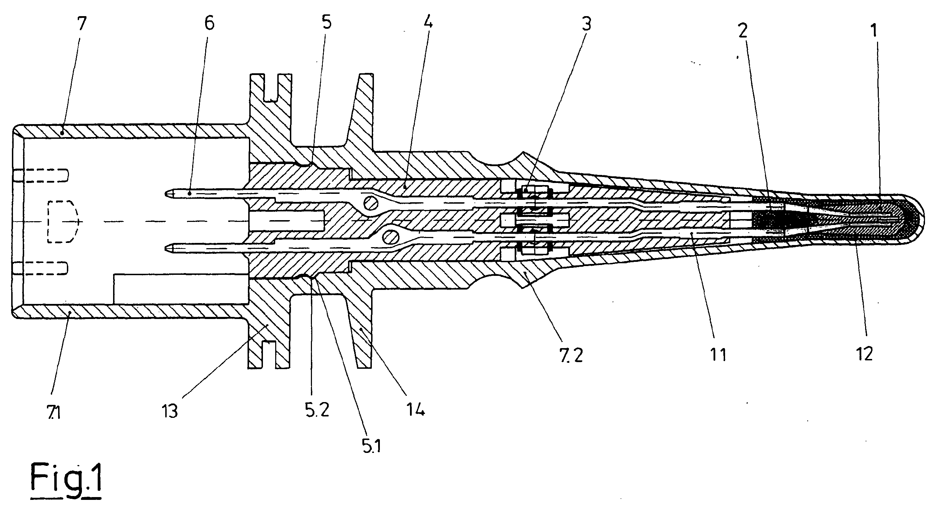

Ein Temperaturfühler gemäß Fig. 1 besteht aus einem NTC-Sensor. Der NTC-Sensor ist ein Widerstandselement mit negativen Temperaturkoeffizienten.

An den NTC-Sensor 1 sind zwei Anschlußelemente 11 angeordnet. Die Anschlußelemente sind an dem NTC-Senor angelötet. Im Verbindungsbereich ist dieser Teil von einem Umschließungskörper 12 ähnlich einem Streichholzkopf umgeben. Über dem von dem Umschließungskörper 12 eingeschlossenen NTC-Sensor 1 ist eine Wärmeleitpaste eingebracht.

Die übrigen Teile der Anschlußelemente 11 sind von einem Umspritzungskörper 4 aus Kunststoff umgeben. Aus dem Umspritzungskörper ragen die beiden Anschlußelemente als Kontaktkörper 6 heraus.

Die Anschlußelemente 11 gehen vom NTC-Sensor V-förmig aus und verlaufen nach dem Bereich, in dem die Wärmeleitpaste 2 eingebracht ist, nicht mehr so stark V-förmig nebeneinander her. Kurz bevor die Anschlußelemente 11 aus dem Umspritzungskörper 4 als Kontaktkörper 6 herausragen, weisen sie ein Verbreiterungsteil auf, das mit einer Ausnehmung als Fixierloch für das Umspritzungswerkzeug versehen ist. Hierdurch erhält jedes Abschlußelement 4 eine Konfiguration, die einem Scherenschenkel oberhalb der Griffeinsteckung ähnlich ist.

Der Umspritzungskörper 4 weist einen umlaufenden Profilringkörper 5.1 auf. Selbstverständlich ist es auch möglich, den Profilringkörper teil- oder abschnittsweise umlaufend vorzusehen. Dieser so ausgebildete Umspritzungskörper 4 ist von einem Steckergehäusekörper 7.1 eines Gehäusehohlkörpers 7 umgeben. Der Steckergehäusekörper 7.1 geht in einen Sensorgehäusekörper 7.2 über, der die beiden Kontaktkörper 6 umschließt. Der Gehäusehohlkörper weist darüber hinaus Fahnenkörper 13, 14 auf, die für eine Montage des Temperaturfühlers vorgesehen sind.

Um die Montagekosten zu minimieren, wird ein vorgefertigter Sensor-Vierer-Block 8 eingesetzt. Der Block 8 besteht aus vier nebeneinander liegenden NTC-Sensoren 1, deren Anschlußelemente 11 durch ein Freischneidträgerprofil 3 verbunden und die vom Umschließungskörper 12 umschlossen sind.

Anschließend werden beim Sensor-Vierer-Block 8 jeweils die Anschlußelemente 11 mit dem Umspritzungskörper 4 umgeben, so daß vier durch das Freischneidträgerprofil 3 verbundene Einsetzelemente 10 entstehen.

Das Umgeben der einzelnen NTC-Sensoren 1 und der mit ihnen verbundenen Anschlußelemente 11 kann auch so vorgenommen werden, daß der Umschließungskörper 12 und der Umspritzungskörper 4 in einem Umspritzungsvorgang ausgebildet werden. Da der Sensor-Vierer-Block 8 vom Hersteller in der gezeigten Form so zugeliefert wird, kann die Umspritzung der NTC-Sensoren 1 auch dort oder an einem anderen Fertigungsstandort vorgenommen werden.

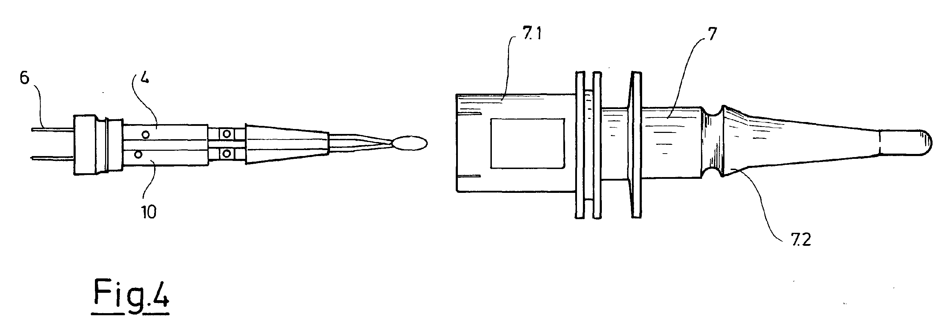

Aus dem Verbund des Einsetz-Vierer-Blocks 9 wird beim Durchtrennen des Freischneidträgerprofils 3 im Bereich der Anschlußelemente 11 ein Einsetzelement 10 herausgedrückt. Anschließend werden dieses Einsetzelement 10 und das Gehäuse 7, wie die Fig. 4 zeigt, hergenommen und in das Innere des Gehäusehohlkörpers in die Wärmeleitpaste 2 eindosiert. Danach wird der Umspritzungskörper 4 des Einsetzelementes 10 in das Innere des Gehäusehohlkörpers 7 eingeschoben. Hierbei rastet der Profilringkörper 5.1 in die Gehäuseringausnehmung 5.2 ein und bildet eine Verrasterungseinrichtung 5 aus. Die Verrasterungseinrichtung 5 verbindet abdichtend den Umspritzungskörper 4 im Gehäusehohlkörper 7. Diese Schnapplösung vermeidet zusätzliche Befestigungshilfen wie Verschweißungen, Thermofixierungen oder den Einsatz von Klebern, so daß die Montage einfacher wird. Vermieden wird darüber hinaus der Einsatz von Dichtelementen oder der Aufwand zur Erzielung einer dichten Verschweißung. Die Verwendung von bereits vorgelöteten Miniatur-Thermosensoren führt zu einer weiteren Reduzierung der Montagekosten bei, wie bereits erwähnt, verbunden mit hohen Temperaturgenauigkeiten bei der Messung.

## Patentansprüche

1. Einrichtung zur Temperaturfühlung, die wenigstens aufweist
- einen Temperatursensor (1) mit wenigstens einem Anschlußelement (11) und
- einen Haltekörper (4, 12), der den Temperatursensor (1) und die Anschlußelemente (11) wenigstens teilweise umschließt,
**dadurch gekennzeichnet,**
- **daß** der Haltekörper als ein Umspritzungskörper (4) und ein Umschließungskörper (12) ausgebildet ist,
- **daß** die Anschlußelemente (11) wenigstens eines Temperatursensors (1), der durch einen Umschließungskörper (12) wenigstens teilweise umschlossen ist, durch ein Trägerprofil (3) verbunden sind,
- **daß** die Anschlußelemente (11) jedes Temperatursensors (1) und das sie verbindende Trägerprofil (3) von einem Umspritzungskörper (4) wenigstens teilweise umschlossen sind, der einen wenigstens teilweise umlaufenden Profilringkörper (5.1) aufweist,
- **daß** das Trägerprofil (3) wenigstens im Bereich der Anschlußelemente (11) zu durchtrennen ist und die vom Umschließungskörper (12) umschlossenen Temperatursensensoren (1) und die vom Umspritzungskörper (4) umschlossenen Anschlußelemente zu Einsetzelementen (10) vereinzelt sind und
- **daß** ein Einsetzelement (10) in einen Gehäusehohlkörper (7) mit einer wenigstens teilweise umlaufenden Gehäuseringausnehmung (5.2) so einzuschieben ist, daß der Profilringkörper (5.1) in die Gehäuseringausnehmung (5.2) einschnappt und mit der so ausgebildeten Verrastungseinrichtung (5) das Einsatzelement (10) mit dem Gehäusehohlkörper (7) verbunden ist.

2. Einrichtung nach Anspruch 1, **dadurch gekennzeichnet, daß** das Trägerprofil (3) aus Kunststoff oder Metall hergestellt ist.

3. Einrichtung nach Anspruch 1, **dadurch gekennzeichnet, daß** die Temperatursensoren (1) durch ein als Freischneidträgerprofil (3) ausgebildetes Trägerprofil zu einem Sensor-Block (8) verbunden sind.

4. Einrichtung nach Anspruch 1, **dadurch gekennzeichnet, daß** die Einsetzelemente (10) durch das Trägerprofil (3) zu einem Einsetz-Block (9) verbunden sind.

5. Einrichtung nach Ansprüchen 1 bis 4, **dadurch gekennzeichnet, daß** aus dem Einsetz-Block (9) jeweils ein Einsetz-Element (10) auszudrücken ist.

6. Einrichtung nach einem der Ansprüche 1 bis 5, **dadurch gekennzeichnet, daß** oberhalb des Temperatursensors (1) zwischen den Anschlußelementen (11) wenigstens teilweise eine Wärmeleitpaste (2) eingebracht ist.

7. Einrichtung nach einem der Ansprüche 1 bis 6, **dadurch gekennzeichnet, daß** die Anschlußelemente (11) als Kontaktträger (6) aus dem Umspritzungskörper (4) herausragen und wenigstens teilweise von einem Steckergehäusekörper (7.1) des Gehäusehohlkörpers (7) umschlossen sind.

8. Einrichtung nach einem der Ansprüche 1 bis 7, **dadurch gekennzeichnet, daß** der Temperatursensor als NTC-Sensor ein Widerstandselement mit negativen oder als PTC-Sensor ein Widerstandselement mit positiven Temperaturkoeffizienten ist.

9. Einrichtung nach einem der Ansprüche 1 bis 8, **dadurch gekennzeichnet, daß** der Umspritzungskörper (4) aus einem elektrisch isolierenden Material hergestellt ist.

10. Einrichtung nach einem der Ansprüche 1 bis 9, **dadurch gekennzeichnet, daß** der Umspritzungskörper (4) und der Gehäusehohlkörper (7) aus Kunststoff geformt sind.

11. Verfahren zur Herstellung einer Einrichtung zur Temperaturfühlung,
**gekennzeichnet durch** die Verwendung von Sensor-Blöcken (8), bei denen Anschlußelemente (11) wenigstens eines Temperatursensors (1) **durch** ein Trägerprofil (3) verbunden sind, der **durch** einen Umschließungskörper (12) wenigstens teilweise umschlossen ist, derart, daß
- a) die Anschlußelemente (11) jedes Temperatursensors (1) und das sie verbindende Trägerprofil (3) mit einem Umspritzungskörper (4) mit einem wenigstens teilweise umlaufenden Profilringkörper (5.1) wenigstens teilweise umschlossen werden,
- b) das Trägerprofil (3) wenigstens im Bereich der Anschlußelemente (11) durchtrennt wird und die vom Umschließungskörper (12) umschlossenen Temperatursensensoren (1) und die vom Umspritzungskörper (4) umschlossenen Anschlußelemente zu Einsetzelementen (10) vereinzelt werden und
- c) ein Einsetzelement (10) in einen Gehäusehohlkörper (7) mit einer wenigstens teilweise umlaufenden Gehäuseringausnehmung (5.2) so einzuschoben wird, daß der Profilringkörper (5.1) in die Gehäuseringausnehmung (5.2) einschnappt und mit der so ausgebildeten Verrastungseinrichtung (5) das Einsatzelement (10) mit dem Gehäusehohlkörper (7) verbunden wird.

12. Verfahren nach Anspruch 11, **dadurch gekennzeichnet, daß** ein vorgefertigter Sensor-Vierer-Block (8) verwendet wird.

13. Verfahren nach Anspruch 11 oder 12, **dadurch gekennzeichnet, daß** als Trägerprofil ein Freischneidträgerprofil (3) verwendet wird, das die Einsatzelemente (10) zu einem Einsetz-Block (9) verbindet.

14. Verfahren nach einem der Ansprüche 11 bis 14, **dadurch gekennzeichnet, daß** aus dem Einsetz-Block (9) jeweils ein Einsetz-Element (10) herausgedrückt wird.

15. Verfahren nach einem der Ansprüche 11 bis 14, **dadurch gekennzeichnet, daß** oberhalb des Temperatursensors (1) zwischen den Anschlußelementen (11) wenigstens teilweise eine Wärmeleitpaste (2) eingebracht wird.

16. Verfahren nach einem der Ansprüche 11 bis 15, **dadurch gekennzeichnet, daß** die Anschlußelemente (11), die aus dem Umspritzungskörper (4) herausragen, als Kontaktträger (6) verwendet werden.

17. Verfahren nach einem der Ansprüche 11 bis 16, **dadurch gekennzeichnet, daß** für den Umspritzungskörper (4) und den Gehäusehohlkörper (7) Kunststoff verwendet wird.
